# EUROPEAN PATENT APPLICATION

(11) **EP 4 783 121 A1**
(43) Date of publication of application: **29.07.2026**
(21) Application number: 24880211.8
(22) Date of filing: 21.10.2024
(51) Int. Cl.: G06T 17/20, G06T 11/60, G06T 7/194, G06T 19/20, G06T 5/77, G06F 3/0484, G06T 7/33

(54) **ELECTRONIC DEVICE AND OPERATING METHOD OF ELECTRONIC DEVICE**

(30) Priority: 21.10.2023 KR 20230141592; 15.12.2023 KR 20230182559
(71) Applicant: Samsung Electronics Co., Ltd., Suwon-si, Gyeonggi-do 16677 (KR)
(72) Inventor: KIM, Sungtae, Suwon-si Gyeonggi-do 16677 (KR); MUN, Jihun, Suwon-si Gyeonggi-do 16677 (KR); PARK, Jiyoon, Suwon-si Gyeonggi-do 16677 (KR); YOO, Nagyeom, Suwon-si Gyeonggi-do 16677 (KR); HYUN, Daeyoung, Suwon-si Gyeonggi-do 16677 (KR)
(74) Representative: Gulde & Partner
(86) International application number: PCT/KR2024/015977
(87) International publication number: WO 2025/084874

(57) **Abstract**

Disclosed is an electronic device for editing a 2D image by using a 3D model. The electronic device may be configured to identify an input 2D image including a first subject and a background, segment the input 2D image into a first subject image including the first subject and a first background image including the background, perform image processing for changing at least one of the size, the location, or the direction of the first subject by using a 3D model for the first subject to generate a second subject image including the changed first subject, perform image processing on at least one of a subject exclusion region in the first background image or an extension region outside the first background image to generate a second background image including the changed background, and generate an output 2D image by combining the second subject image with the second background image.

## Description

### [Technical Field]

The disclosure relates to an electronic device and a method for operating the electronic device.

### [Background Art]

Image-based three-dimensional (3D) modeling is one of the research topics in computer vision for modeling a subject in three dimensions. The image-based 3D modeling may be, e.g., a technology to obtain surface information of a subject based on images captured from various viewpoints and obtain a 3D model for the subject. With the recent emergence of technologies such as neural radiance fields (NeRF) that learn a three-dimensional neural network representation and may effectively synthesize images as if captured from an arbitrary position based thereon, significant progress is being made in 3D modeling.

The image-based 3D modeling generally requires images of the same subject captured from various viewpoints. However, it is difficult to provide accurate guidance for this photography process to general users. Further, to obtain a usable level of a precise 3D model, it is necessary to restrict a capturing location or to perform simultaneous capturing while minimizing movement of a subject. However, it is difficult to provide such an environment in a real-world usage environment. Therefore, there is a need to consider a method of generating a 3D model by utilizing images that a user already has, without requiring a limited and specialized capturing process aimed at generating the 3D model.

The above-described information may be provided as related art for the purpose of assisting understanding of the disclosure. No claim or determination is made as to whether any of the foregoing is applicable as background art in relation to the disclosure.

### [Disclosure of Invention]

### [Solution to Problems]

According to an embodiment of the disclosure, an electronic device may include a memory and a processor. The electronic device (or, the processor) may identify an input two-dimensional (2D) image including a first subject and a background. The electronic device (or, the processor) may separate the input 2D image into a first subject image including the first subject and a first background image including the background. The electronic device (or, the processor) may perform image processing to change at least one of a size, a position, or an orientation of the first subject using a three-dimensional (3D) model for the first subject, to generate a second subject image including a changed first subject. The electronic device (or, the processor) may perform image processing for at least one of a subject exclusion area within the first background image or an extended area outside the first background image, to generate a second background image including a changed background. The extended area may be associated with a change of the first subject. The electronic device (or, the processor) may be configured to combine the second subject image and the second background image to generate an output 2D image.

According to an embodiment of the disclosure, a method of an electronic device may include identifying an input two-dimensional (2D) image including a first subject and a background. The method of the electronic device may include separating the input 2D image into a first subject image including the first subject and a first background image including the background. The method of the electronic device may include performing image processing to change at least one of a size, a position, or an orientation of the first subject using a three-dimensional (3D) model for the first subject, to generate a second subject image including a changed first subject. The method of the electronic device may include performing image processing for at least one of a subject exclusion area within the first background image or an extended area outside the first background image, to generate a second background image including a changed background. The extended area may be associated with a change of the first subject. The method of the electronic device may include combining the second subject image and the second background image to generate an output 2D image.

According to an embodiment of the disclosure, in a storage medium storing at least one computer-readable instruction, the at least one instruction, when executed by at least one processor of an electronic device, may enable the electronic device to perform at least one operation. The at least one operation may include identifying an input two-dimensional (2D) image including a first subject and a background. The at least one operation may include separating the input 2D image into a first subject image including the first subject and a first background image including the background. The at least one operation may include performing image processing to change at least one of a size, a position, or an orientation of the first subject using a three-dimensional (3D) model for the first subject, to generate a second subject image including a changed first subject. The at least one operation may include performing image processing for at least one of a subject exclusion area within the first background image or an extended area outside the first background image, to generate a second background image including a changed background. The extended area may be associated with a change of the first subject. The at least one operation may include combining the second subject image and the second background image to generate an output 2D image.

### [Brief Description of Drawings]

FIG. 1 is a block diagram illustrating an electronic device in a network environment according to various embodiments of the disclosure.
FIG. 2 schematically illustrates a three-dimensional modeling procedure according to an embodiment of the disclosure.
FIG. 3 is a flowchart illustrating a method of generating a 3D model according to an embodiment of the disclosure.
FIG. 4 illustrates a 3D model generated for each time interval according to an embodiment of the disclosure.
FIG. 5 is a flowchart illustrating a method of generating or updating a 3D model according to an embodiment of the disclosure.
FIG. 6 is a flowchart illustrating a procedure of editing a 2D image using a 3D model according to an embodiment of the disclosure.
FIG. 7 illustrates an example of 2D image editing using a 3D model according to an embodiment of the disclosure.
FIG. 8 illustrates an example of 2D image editing using a 3D model according to an embodiment of the disclosure.
FIG. 9 is a flowchart illustrating a procedure of editing a 2D image using a 3D model according to an embodiment of the disclosure.
FIG. 10 illustrates an example of 2D image editing using a 3D model according to an embodiment of the disclosure.
FIG. 11 illustrates an example of 2D image editing using a 3D model according to an embodiment of the disclosure.
FIG. 12 is a flowchart illustrating a procedure of generating an image using a 3D model according to an embodiment of the disclosure.
FIG. 13 illustrates an example of an image processing operation using a 3D model within a procedure of generating an image using the 3D model according to an embodiment of the disclosure.
FIG. 14 illustrates examples of images generated through a procedure of generating images using a 3D model according to an embodiment of the disclosure.
FIG. 15 is a flowchart illustrating a procedure of using a 3D model according to an embodiment of the disclosure.
FIG. 16 illustrates an example of a capturing guide provided for supplementing a 3D model according to an embodiment of the disclosure.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

In this case, it may be understood that each block of processing flowchart drawings and combinations of flowchart drawings may be performed by computer program instructions.

Further, each block may represent a module, segment, or portion of code that includes one or more executable instructions to execute designated logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

In this case, the term "~unit" used in this embodiment means a hardware component such as software or field programmable gate array (FPGA) or application specific integrated circuit (ASIC), and "~unit" performs predetermined roles. However, 'unit' is not limited to software or hardware. A 'unit' may be configured in a storage medium that may be addressed or may be configured to execute one or more packet processing devices. Accordingly, as an example, "~unit" includes components such as software components, object-oriented software components, class components, and task components, processes, functions, attributes, procedures, subroutines, segments of program code, drivers, firmware, microcode, circuitry, data, databases, data structures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

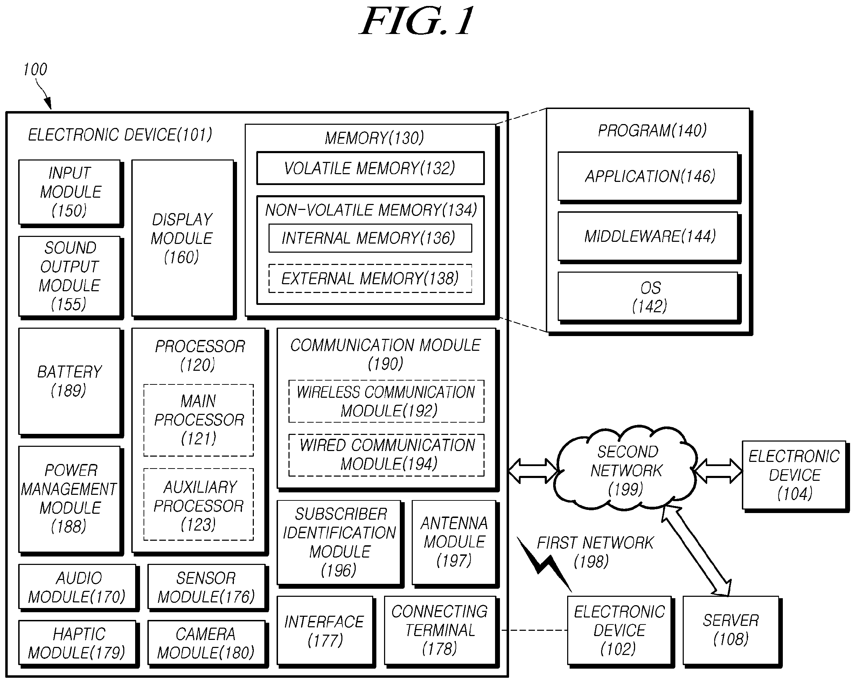

FIG. 1 is a block diagram illustrating an electronic device in a network environment, according to various embodiments of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, in case that the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a communication module 192 (e.g., a cellular communication module, a short-range communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The communication module 192 may identify or authenticate the electronic device 101 in a communication network, such as the first network 198 or the second network 199, using subscriber information (e.g., international mobile subscriber identity (IMSI)) stored in the subscriber identification module 196.

The communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The communication module 192 may support a high-frequency band (e.g., the mmWave band) to achieve, e.g., a high data transmission rate. The communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The communication module 192 may support various requirements specified in the electronic device 101, an external electronic device (e.g., the electronic device 104), or a network system (e.g., the second network 199). According to an embodiment, the communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mm Wave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

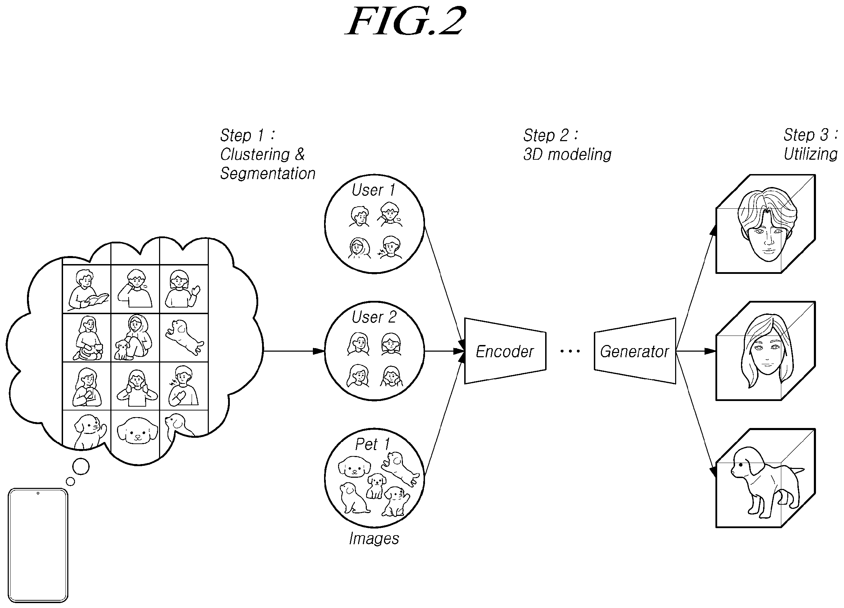

FIG. 2 schematically illustrates a three-dimensional modeling procedure according to an embodiment of the disclosure.

Referring to FIG. 2, a three-dimensional (3D) modeling procedure may include an operation (hereinafter, referred to as a first operation) of processing images (e.g., two-dimensional (2D) images (e.g., captures)) for generating a 3D model for at least one subject (or, an object), an operation (hereinafter, referred to as a second operation) of generating a 3D model for the at least one subject (or, the object) using the processed images, and/or an operation (hereinafter, referred to as a third operation) of using the generated 3D model. In various embodiments of the disclosure, for convenience of description, an image used for generating a 3D model is described as being a 2D image (e.g., a photograph), but the disclosure is not limited thereto. For example, a 3D image and/or a drawing may be used for generating the 3D model.

According to an embodiment, the images used for generating the 3D model may include images stored in a storage device (e.g., a photo storage) within an electronic device (e.g., the electronic device 101 of FIG. 1) and/or images stored in a storage device (e.g., a cloud) connected to the electronic device. According to an embodiment, the images stored internally and/or externally to the electronic device may be images captured and stored from a past point of time to the present. In other words, the images may be images accumulated over a long period of time. Meanwhile, since these images were not obtained for the purpose of 3D modeling, pre-processing such as the first operation is required for the images to be used for 3D modeling.

According to an embodiment, the first operation may include a clustering operation and/or a segmentation operation. In various embodiments of the disclosure, the clustering operation may also be referred to as a classification operation, and the segmentation operation may also be referred to as a separation operation.

According to an embodiment, in the clustering operation of the first operation, the electronic device (e.g., the electronic device 101 of FIG. 1) may analyze images (e.g., 2D images (e.g., captures)) to identify at least one subject, and cluster the corresponding images per subject. For example, as illustrated in FIG. 2, in case that images of a user 1, images of a user 2, and images of a pet 1 are obtained, the electronic device may cluster the images of the user 1, the images of the user 2, and the images of the pet 1 into separate clusters, respectively.

According to an embodiment, the electronic device may cluster the obtained images per subject using a pre-trained first artificial intelligence (AI) model (hereinafter, referred to as a clustering model). In the disclosure, the clustering model may also be referred to as a classification model.

According to an embodiment, the electronic device may store the clustered (or, classified) images through the clustering operation in a storage device (e.g., a database (DB)). As an example, the electronic device may store the clustered images per cluster (or, per subject).

At least some of the images obtained through the above-described clustering operation may include a subject and a background together. For example, at least some of the clustered images for the user 1 may include a background (e.g., the pet 1, a surrounding environment, etc.) other than the user 1. As such, an image including the subject and the background together may not be suitable for generating a 3D model for the corresponding subject. Therefore, the background needs to be removed through a segmentation operation to be described below.

According to an embodiment, in the segmentation operation of the first operation, the electronic device may segment (or, separate) the corresponding subject and the background within an image clustered per subject.

According to an embodiment, the electronic device may segment the subject and the background within the clustered image using a pre-trained second artificial intelligence (AI) model (hereinafter, referred to as a segmentation model). Accordingly, images including only the subject from which the background is excluded (hereinafter, referred to as subject images) and images including only the background from which the subject is excluded (hereinafter, referred to as background images) may be generated for each cluster. In various embodiments of the disclosure, the segmentation model may also be referred to as a separation model.

According to an embodiment, the electronic device may store the images obtained through the segmentation operation in a storage device (e.g., a database (DB)). As an example, the electronic device may store the segmented images (e.g., the subject images and/or the background images) per cluster (or, per subject).

According to an embodiment, the first operation may further include an additional image processing operation.

According to an embodiment, in the additional image processing operation of the first operation, in case that the subject is a person, the electronic device may detect a specific portion (e.g., a face or an upper body of a person) of the subject from the subject images. According to an embodiment, the electronic device may store images of the detected specific portion of the subject (e.g., face images, upper body images) in a storage device (e.g., a database (DB)).

According to an embodiment, in the additional image processing operation of the first operation, the electronic device may perform image processing (e.g., lighting processing, shadow processing, and/or processing related to a style (e.g., glasses, beard, hairstyle, etc.) of the subject) for generating various 3D models for the subject.

According to an embodiment, the second operation may include a 3D modeling operation.

According to an embodiment, in the 3D modeling operation, the electronic device may generate a 3D model for the corresponding subject using images of the subject (the subject images).

According to an embodiment, the electronic device may use information included in an image of the corresponding subject to generate the 3D model for the subject. The information included in the image may include, e.g., feature information of the image (e.g., features of the subject and/or features of the background), segmentation information related to the segmentation of the subject and the background, position information and orientation information about the image (e.g., position information (e.g., relative position) and orientation information (e.g., camera direction/angle) of a camera capturing the image), and/or information about the time in case that the image was captured.

According to an embodiment, the electronic device may generate the 3D model for the corresponding subject using a pre-trained third artificial intelligence (AI) model (hereinafter, referred to as a 3D modeling model).

According to an embodiment, the 3D modeling model may include at least one network. For example, as illustrated in FIG. 2, the 3D modeling model may include an encoder and/or a generator.

According to an embodiment, the encoder may be a network obtaining features (or, a feature vector) for the corresponding subject (or, the object) from input data (e.g., the subject images). The feature vector for the subject (or, the object) may provide information about a shape, surface properties, and structure of the subject (or, the object). The feature vector may be used in a subsequent processing process, e.g., a processing process of the generator.

According to an embodiment, the generator may be a network generating a 3D model from a given input. For example, the generator may generate the 3D model for the corresponding subject (or, the object) using the feature vector obtained from the encoder.

According to an embodiment, the electronic device may store the 3D models obtained through the 3D modeling operation in a storage device (e.g., a database (DB)). As an example, the electronic device may store the 3D models per cluster (or, per subject).

According to an embodiment, the first operation and the second operation may be executed in the background during a period in case that the electronic device is not being used (e.g., an idle period). In other words, the image processing and 3D modeling for generating the 3D model may be performed as a background task. As an example, in case that generation of the 3D model using images stored internally (or, externally) to the electronic device is consented to by a user (e.g., in case that a user consent input is received), the electronic device may perform an operation for image processing and 3D modeling for generating the 3D model using the obtained images as a background task.

According to an embodiment, the first operation and the second operation may be executed automatically. As an example, in case that a preset number or more of images for a subject are obtained, the electronic device may automatically initiate and execute the first operation and the second operation.

In case of generating the 3D model for a subject through the above-described first operation and the second operation, since the 3D model is generated using images of the subject that a user has frequently captured and stored with interest, a cumbersome separate preliminary capturing task for generating the 3D model may be omitted.

According to an embodiment, the third operation may include a 3D model utilization operation.

According to an embodiment, in the 3D model utilization operation of the third operation, the electronic device may edit (or, change) an existing image (e.g., a 2D image) using the 3D model.

According to an embodiment, in the 3D model utilization operation of the third operation, the electronic device may generate a new image (e.g., a 2D image) using the 3D model. As an example, the electronic device may use the 3D model as a sub input of a generative AI for generating the 2D image.

Through the above-described 3D model utilization operation, personalized image editing is possible, and personalized image generation using a generative AI is possible.

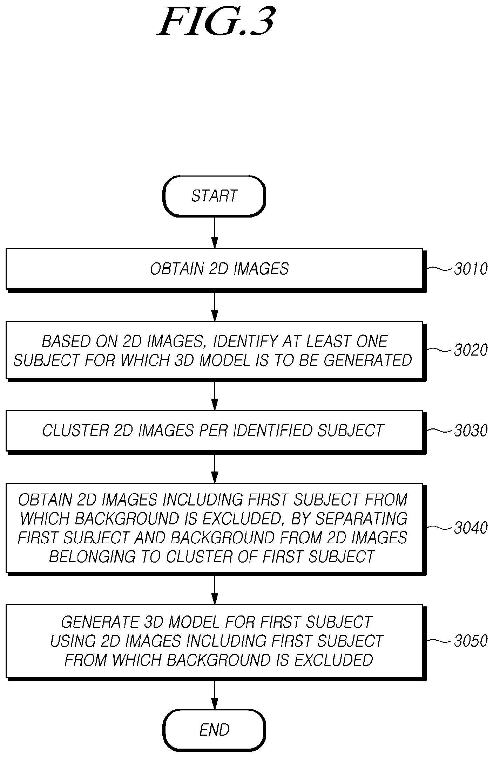

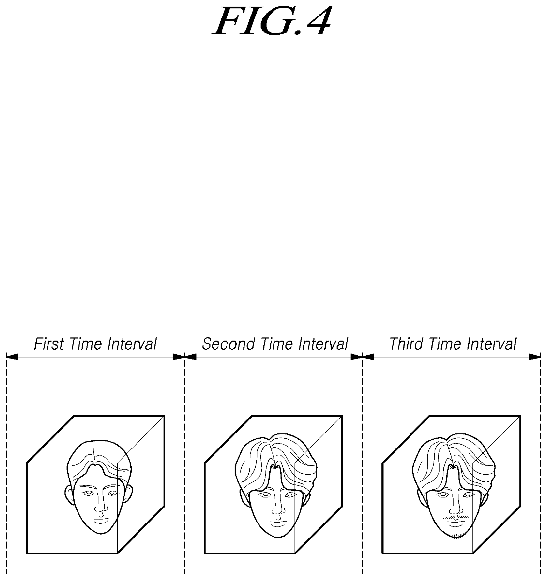

FIG. 3 is a flowchart illustrating a method of generating a 3D model according to an embodiment of the disclosure. FIG. 4 illustrates a 3D model generated for each time interval according to an embodiment of the disclosure.

The method of generating a 3D model of FIG. 3 may be an example of a method of generating a 3D model for a subject (or, an object) through the first operation and the second operation of FIG. 2. Accordingly, redundant descriptions are omitted.

According to an embodiment, the method of generating a 3D model may be initiated, e.g., after a user input consenting to generation of the 3D model using a 2D image stored in a photo storage of the electronic device is identified.

According to an embodiment, the method of generating a 3D model may be executed as a background task in the background during a period in case that the electronic device is not being used (e.g., an idle period).

Referring to FIG. 3, in operation 3010, the electronic device (e.g., the electronic device 101 of FIG. 1) may obtain 2D images. According to an embodiment, the electronic device may obtain the 2D images from at least one of an internal storage device (e.g., a photo gallery) of the electronic device or an external storage device (e.g., a cloud) connected to the electronic device.

According to an embodiment, the electronic device may obtain a preset number or more of 2D images. According to an embodiment, the preset number may be a minimum number of 2D images required for generating the 3D model for the subject.

In operation 3020, the electronic device may identify at least one subject (e.g., at least one subject for which a 3D model is to be generated) based on the 2D images. The at least one subject may include a first subject (e.g., the user 1 of FIG. 2). The at least one subject may be, e.g., a subject included in the 2D images.

According to an embodiment, the electronic device may analyze the 2D images to identify the at least one subject for which the 3D model is to be generated.

In operation 3030, the electronic device may cluster (or, classify) the 2D images per the identified subject.

According to an embodiment, the electronic device may cluster the 2D images per the identified subject using a pre-trained clustering model.

In operation 3040, the electronic device may obtain 2D images including the first subject from which the background is excluded (the subject images), by separating the first subject and the background from 2D images belonging to a cluster of the first subject.

According to an embodiment, the electronic device may obtain 2D images including only the first subject from which the background is excluded, by separating the first subject and the background from the 2D images belonging to the cluster of the first subject using a pre-trained segmentation model.

According to an embodiment, in case that the subject is a person, the electronic device may detect a face or an upper body including the face of the person from the 2D images including only the first subject from which the background is excluded, and obtain 2D images including only the face or 2D images including only the upper body. Accordingly, the electronic device may obtain images from the subject images from which portions other than the face or the upper body are excluded.

In operation 3050, the electronic device may generate the 3D model for the first subject using the 2D images including the first subject from which the background is excluded.

According to an embodiment, in case that the first subject is a person, the electronic device may generate the 3D model for a portion (e.g., the face or the upper body) of the first subject using 2D images including the first subject or the portion (e.g., the face or the upper body) of the first subject. As an example, the electronic device may perform face detection and facial landmark detection using the 2D images including the first subject or the face of the first subject to obtain feature data about the face, and generate the 3D model (a 3D face model) for the face using the feature data.

According to an embodiment, the electronic device may generate the 3D model for the first subject (or, the portion of the first subject) using a pre-trained 3D modeling model.

According to an embodiment, the electronic device may generate a plurality of 3D models for the same first subject in chronological order (e.g., for each time interval). As an example, the 2D images used for generating the 3D model for the first subject may be 2D images of the first subject from a first point of time to a second point of time after the first point of time. For example, 2D images gradually captured and stored from a past point of time to a present point of time (e.g., images of a user's face captured and stored gradually over a long period of time) may be used for generating the 3D model. In this case, characteristics of the corresponding subject illustrated in the 2D images may vary over time even though the subject is the same. Therefore, to provide a 3D model of the subject that is substantially identical to an actual appearance of the subject at the corresponding point of time, the electronic device may generate a 3D model for the first subject for each time interval, instead of generating only one 3D model for the first subject.

According to an embodiment, the electronic device may identify a period of the 2D images (e.g., a capturing period from the first point of time to the second point of time) using time information (e.g., capturing time information) included in the 2D images (e.g., the 2D images including the first subject from which the background is excluded) used for generating the 3D model for the first subject, divide the period of the 2D images into a plurality of time intervals, and generate a 3D model for the first subject for each time interval using the 2D images belonging to each time interval. As an example, in case that the 2D images used for generating the 3D model are face images of a user over 15 years, the electronic device may generate a 3D model for the face of the user in 5-year increments, and generate three 3D face models for the corresponding user. For example, as illustrated in FIG. 4, for the first subject (the user 1 of FIG. 1), a 3D model of a first time interval, a 3D model of a second time interval after the first time interval, and a 3D model of a third time interval after the second time interval may be generated. The 3D model of each time interval may show characteristics (e.g., facial characteristics) of the first subject in the corresponding time interval.

According to an embodiment, the electronic device may three-dimensionally provide (or, record) an appearance of the corresponding subject changing over time using the plurality of 3D models for the subject (or, the object) generated in chronological order. For example, the electronic device may three-dimensionally provide the appearance of the corresponding subject changing over time by matching 3D feature points among the plurality of 3D models for the subject generated for each time interval. For example, the electronic device may match the 3D feature points among the plurality of 3D models for the subject generated for each time interval, and three-dimensionally provide the appearance of the corresponding subject changing over time by synthesizing a process of changing over time. As an example, the electronic device may match the 3D feature points among the plurality of 3D models for the face of the first subject generated in chronological order, as illustrated in FIG. 4, and three-dimensionally provide a user with the appearance of the face of the first subject changing over time by synthesizing the process of changing over time.

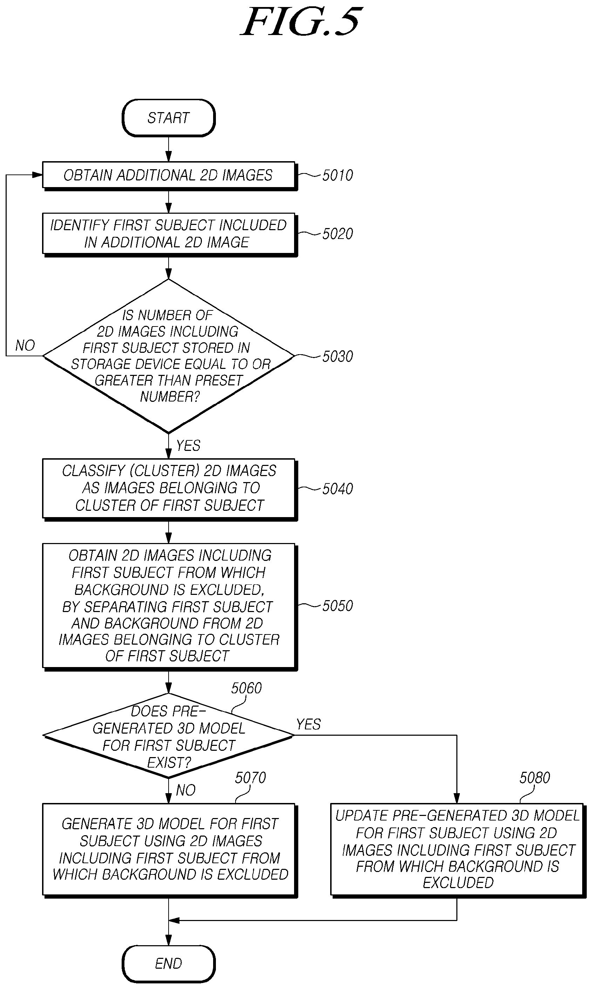

FIG. 5 is a flowchart illustrating a method of generating or updating a 3D model according to an embodiment of the disclosure.

The method of generating or updating a 3D model of FIG. 5 may be, e.g., a method performed in case that a 2D image is additionally obtained, but the disclosure is not limited thereto.

As described above, the 2D images used for generating the 3D model for the subject may be 2D images gradually captured and stored from a past point of time to a present point of time. A 3D model generated using such 2D images may have a higher completeness as more 2D images of the corresponding subject are accumulated. Therefore, to gradually increase the completeness (and/or precision) of the 3D model, a procedure for updating an already generated 3D model using newly added 2D images is required.

Referring to FIG. 5, in operation 5010, the electronic device (e.g., the electronic device 101 of FIG. 1) may obtain an additional 2D image. According to an embodiment, the additional 2D image may be, e.g., an image captured by the electronic device and newly stored in a storage device (e.g., a photo storage) within the electronic device, or an image newly stored in a storage device (e.g., a cloud) connected to the electronic device.

In operation 5020, the electronic device may analyze the additional 2D image to identify a subject (hereinafter, referred to as the first subject) included in the additional 2D image.

In operation 5030, the electronic device may identify whether the number of 2D images including the first subject is equal to or greater than a preset number. For example, the electronic device may identify whether the number of 2D images including the first subject among 2D images stored in the storage device is equal to or greater than the preset number. In case that the number of 2D images including the first subject is equal to or greater than the preset number, operation 5040 may be performed. In case that the number of 2D images including the first subject is less than the preset number, the additional 2D image may be stored in the storage device, and operation 5010 may be performed again. Accordingly, the electronic device may perform image clustering for the corresponding subject only in case that a sufficient number of 2D images of the subject are stored (or, obtained), and unnecessary power consumption due to image clustering may be prevented.

In operation 5040, the electronic device may classify (or, cluster) the 2D images including the first subject as images belonging to a cluster of the first subject. For the description of operation 5040, the description of operation 3030 of FIG. 3 may be referred to. Therefore, no duplicate description is given.

In operation 5050, the electronic device may obtain 2D images including the first subject from which the background is excluded, by separating the first subject and the background from the 2D images belonging to the cluster of the first subject. For the description of operation 5050, the description of operation 3040 of FIG. 3 may be referred to. Therefore, no duplicate description is given.

According to an embodiment, the electronic device may identify whether the first subject is a person. In case that the first subject is a person, the electronic device may perform face detection and facial landmark detection using the 2D images including the first subject to obtain feature data about the face.

In operation 5060, the electronic device may identify whether a pre-generated 3D model for the first subject is present. According to an embodiment, in case that the subject is a person, the electronic device may identify whether a pre-generated 3D model (a 3D face model) for the face is present using the feature data about the face.

In case that the pre-generated 3D model for the first subject is not present, operation 5070 may be performed. In case that the pre-generated 3D model for the first subject is present, operation 5080 may be performed.

In operation 5070, the electronic device may generate the 3D model for the first subject using the 2D images including the first subject from which the background is excluded. For the description of operation 5070, the description of operation 3050 of FIG. 3 may be referred to. Therefore, no duplicate description is given.

According to an embodiment, in case that the pre-generated 3D face model for the face is not present, the electronic device may generate the 3D model for the face using the feature data about the face. As such, the 3D model may be newly generated using the newly added 2D images.

In operation 5080, the electronic device may update (or, refine) the pre-generated 3D model for the first subject using the 2D images including the first subject from which the background is excluded. Through such updating of the 3D model using the additional 2D images, the completeness and/or precision of the already generated 3D model may gradually increase over time.

According to an embodiment, the electronic device may update the already generated 3D model using a pre-trained artificial intelligence model (hereinafter, referred to as a refine model).

According to an embodiment, the electronic device may store the updated 3D model in a storage device (e.g., a database (DB)). As an example, the electronic device may store the updated 3D model per cluster (or, per subject).

According to an embodiment, in case that the pre-generated 3D model for the face is present, the electronic device may update the 3D face model for the face using the feature data about the face. As such, the existing 3D model may be updated using the newly added 2D images.

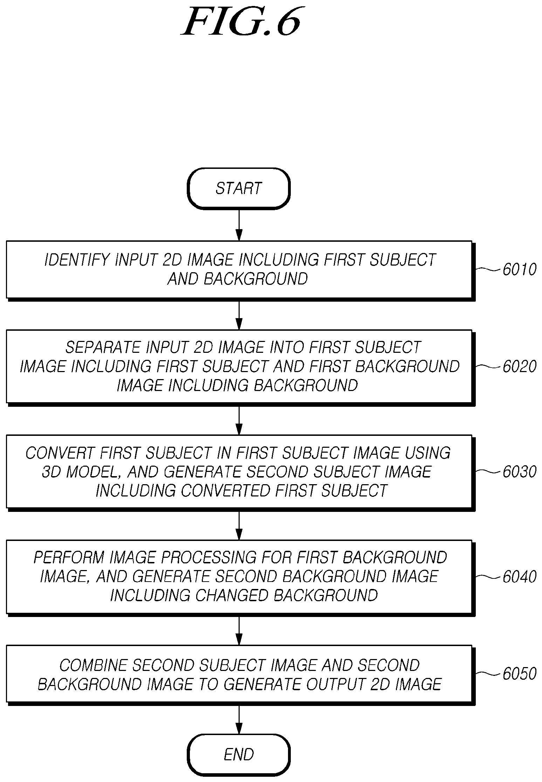

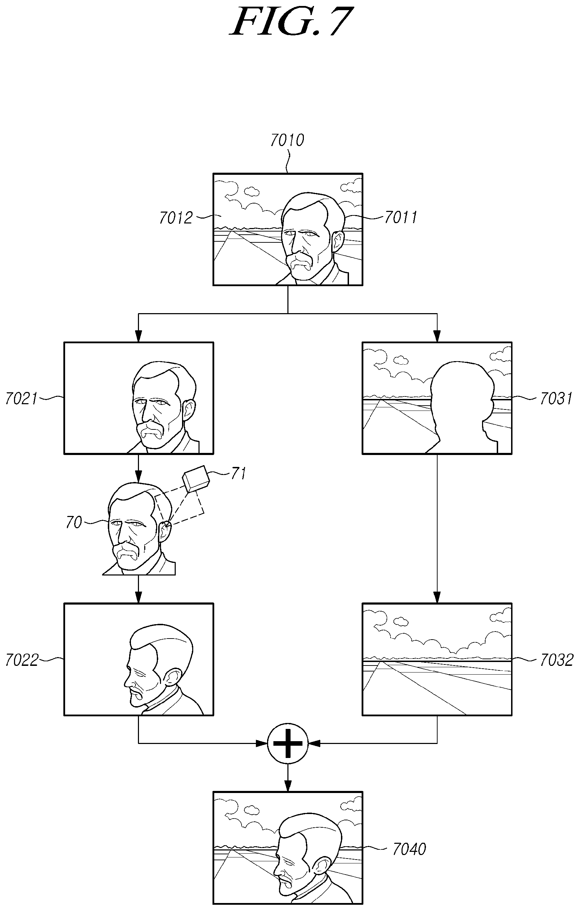

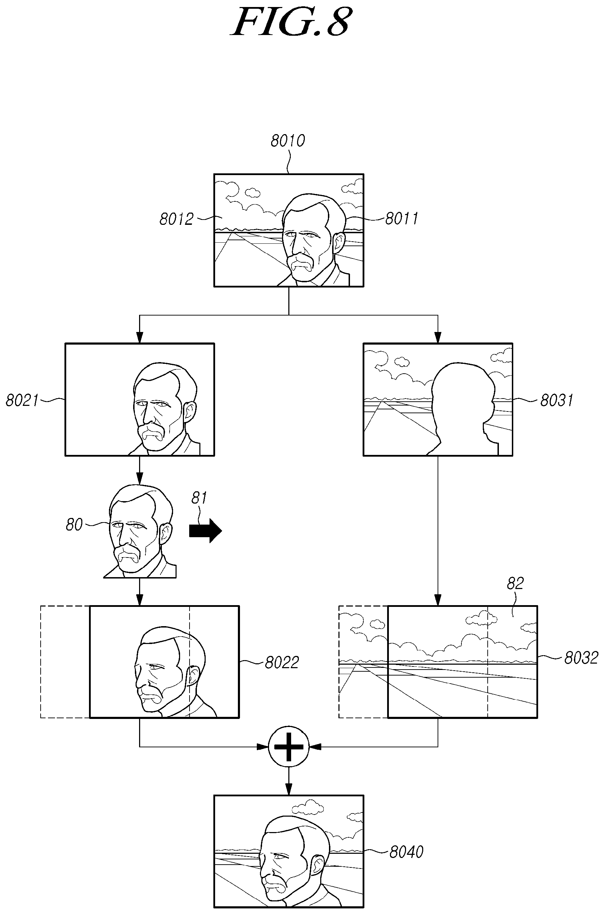

FIG. 6 is a flowchart illustrating a procedure of editing a 2D image using a 3D model according to an embodiment of the disclosure. FIG. 7 illustrates an example of 2D image editing using a 3D model according to an embodiment of the disclosure. FIG. 8 illustrates an example of 2D image editing using a 3D model according to an embodiment of the disclosure.

The 2D image editing of the embodiments of FIGS. 7 and 8 may be, e.g., 2D image editing using the 2D image editing procedure of FIG. 6.

According to an embodiment, the editing of the 2D image using the 3D model may include, e.g., rotation, translation, scaling, expression change, lighting effect, shadow effect, restoration of a blurred portion, and/or composition of a subject (or, an object) in the 2D image using the 3D model, but the disclosure is not limited thereto.

Referring to FIG. 6, in operation 6010, the electronic device (e.g., the electronic device 101 of FIG. 1) may identify (or, obtain) an input 2D image including a target subject (hereinafter, may be referred to as the first subject) and a background. For example, as illustrated in FIGS. 7 and 8, the electronic device may identify an input 2D image 7010, 8010 including a first subject 7011, 8011 and a background 7012, 8012.

In operation 6020, the electronic device may separate the input 2D image into a first subject image including the first subject and a first background image including the background. For example, as illustrated in FIGS. 7 and 8, the electronic device may separate the input 2D image 7010, 8010 into a first subject image 7021, 8021 and a first background image 7031, 8031.

According to an embodiment, the first subject image may be an image including only the target subject from which the background is excluded (or, removed) from the input 2D image. According to an embodiment, the first background image may be an image including only the background from which the target subject is excluded (or, removed) from the input 2D image. According to an embodiment, the background may be a portion (e.g., another subject, a surrounding environment, etc.) other than the target subject. In various embodiments of the disclosure, an area where the target subject is excluded in the first background image may be referred to as a subject exclusion area.

In operation 6030, the electronic device may convert the first subject in the first subject image using the 3D model for the first subject to generate a second subject image including a converted first subject.

According to an embodiment, converting the first subject may include changing at least one of a size, a position, or an orientation of the first subject.

According to an embodiment, the electronic device may deform the 3D model for the first subject based on the first subject image, and convert the first subject in the first subject image using the deformed 3D model. As an example, the electronic device may deform the 3D model for the first subject into a 3D model corresponding to (or, fitting) the first subject image based on the first subject image. The deformation of the 3D model may use a defined deformation method.

According to an embodiment, the electronic device may perform image processing to change at least one of a size, a position, or an orientation of the first subject using the 3D model (or, the deformed 3D model) for the first subject, to generate the second subject image including the changed first subject.

According to an embodiment, the electronic device may change the orientation of the first subject by changing an orientation of a virtual camera toward the 3D model (or, the deformed 3D model) corresponding to the first subject based on a user input. For example, as illustrated in FIG. 7, the electronic device may change the orientation of the first subject 7011 based on receiving a user input changing the orientation of a virtual camera 71 directed toward the 3D model (or, the deformed 3D model 70) corresponding to the first subject 7011. Thereafter, the electronic device may generate (or, render) the second subject image including the first subject of which the orientation is changed. For example, as illustrated in FIG. 7, the electronic device may generate the second subject image 7022 including the first subject 7011 of which the orientation is changed. Accordingly, a shape (or, an appearance) of the first subject in a different orientation may be illustrated. For example, as illustrated in FIG. 7, a left side of the face, rather than a front of the face of the first subject illustrated on the first subject image 7021, may be illustrated on the second subject image 7022.

According to an embodiment, the electronic device may change the position and/or orientation of the first subject by changing the position of the first subject using the 3D model (or, the deformed 3D model) corresponding to the first subject based on a user input. For example, the electronic device may obtain a user input for translating the first subject in a first direction (e.g., an upward, downward, leftward, or rightward direction), and change the position and orientation of the first subject using the 3D model (or, the deformed 3D model) corresponding to the first subject in response to obtaining the user input. For example, as illustrated in FIG. 8, the electronic device may obtain a user input for moving the 3D model (or, the deformed 3D model) corresponding to the first subject in a rightward direction 81, and change the position and orientation of the first subject 8021 together using the 3D model (or, the deformed 3D model) corresponding to the first subject in response to obtaining the user input. As such, the user input is merely a user input for position movement of the first subject, but for example, considering that a composition of a camera that captured the input 2D image is fixed regardless of the position movement of the first subject, under the corresponding camera composition, the position movement of the first subject may accompany a change in position and orientation. Thereafter, the electronic device may generate (or, render) the second subject image including the first subject of which the position and orientation are changed. For example, as illustrated in FIG. 8, the electronic device may generate the second subject image 8022 including the first subject 8011 of which the position and orientation are changed. Accordingly, the shape (or, the appearance) of the first subject in a different position and orientation may be illustrated. For example, as illustrated in FIG. 8, an intermediate face between a front and a left side, rather than the front of the face of the first subject 8011 illustrated on the first subject image 8021, may be illustrated on the second subject image 8022. In other words, the shape of the first subject of which the position and orientation are changed may be illustrated.

According to an embodiment, the electronic device may generate the second subject image including the first subject of which the size, position, and/or orientation are changed, by changing the size of the first subject using the 3D model (or, the deformed 3D model) for the first subject. As an example, the electronic device may change the size of the first subject using the 3D model (or, the deformed 3D model) for the first subject based on a user input.

According to an embodiment, the electronic device may perform image processing to provide expression change, lighting effect, shadow effect, restoration of a blurred portion, and/or composition of the first subject using the 3D model (or, the deformed 3D model) for the first subject, to generate the second subject image including the changed first subject. As an example, the electronic device may perform image processing to provide expression change, lighting effect, shadow effect, restoration of a blurred portion, and/or composition of the first subject using the 3D model (or, the deformed 3D model) based on a user input.

In operation 6040, the electronic device may perform image processing for the first background image to generate a second background image including a changed background. According to an embodiment, operation 6040, which is an image processing operation for the first background image, may be performed in parallel with image processing operations for the first subject image (e.g., operations 6020 and 6030). For example, operation 6040 may be performed simultaneously with operation 6020 or operation 6030. A sequential relationship between operation 6040 and operation 6020 or operation 6030 may vary according to an implementation method.

According to an embodiment, the electronic device may perform image processing for at least one of a subject exclusion area within the first background image or an extended area outside the first background image, to generate the second background image including the changed background. According to an embodiment, the extended area may be associated with a change (e.g., a position change) of the first subject.

According to an embodiment, the image processing for the subject exclusion area within the first background image may include in-painting processing for the subject exclusion area within the first background image. The in-painting processing may be, e.g., image processing for restoring a missing area within an image based on information about a current image. For example, the image processing for the subject exclusion area within the first background image may include in-painting processing to add a background to the subject exclusion area based on information included in the first background image. As an example, as illustrated in FIG. 7, the electronic device may generate the second background image 7032 including the changed background by performing in-painting processing to restore an area where the first subject is excluded (the subject exclusion area) within the first background image 7031 based on information included in the first background image 7031. Accordingly, the subject exclusion area may be filled with the background.

According to an embodiment, the image processing for the extended area outside the first background image may include out-painting processing for an extended area corresponding to a changed position of the subject outside the first background image. The out-painting processing may be, e.g., image processing for additionally generating an image for an extended area based on current information. For example, the image processing for the extended area outside the first background image may include out-painting processing to add a background to the extended area associated with the changed position of the subject based on information included in the first background image. As an example, as illustrated in FIG. 8, the electronic device may generate the second background image 8032 including the changed background by performing out-painting processing to additionally generate a background for an extended area 82 corresponding to the changed position of the subject outside the first background image 8031 based on information included in the first background image 8031. Accordingly, a background may be newly added to a portion (or, an area) that extends according to the position movement of the subject.

According to an embodiment, the image processing for the first background image may include the above-described in-painting processing and out-painting processing. As an example, as illustrated in FIG. 8, the electronic device may generate the second background image 8032 including the changed background by performing in-painting processing to restore an area where the first subject is excluded (the subject exclusion area) within the first background image 8031 based on information included in the first background image 8031, and performing out-painting processing to additionally generate a background for the extended area corresponding to the changed position of the subject outside the first background image 8031.

In operation 6050, the electronic device may combine the second subject image and the second background image to generate an output 2D image. For example, as illustrated in FIGS. 7 and 8, the electronic device may combine the second subject image 7022, 8022 and the second background image 7032, 8032 to generate an output 2D image 7040, 8040.

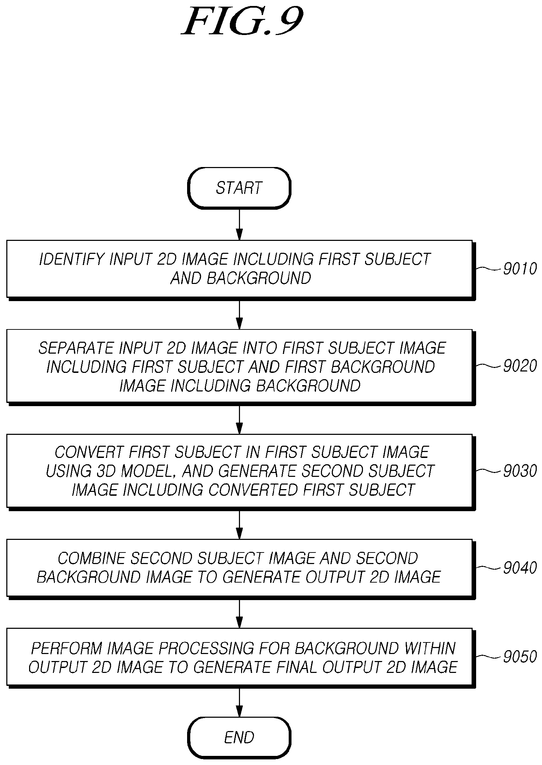

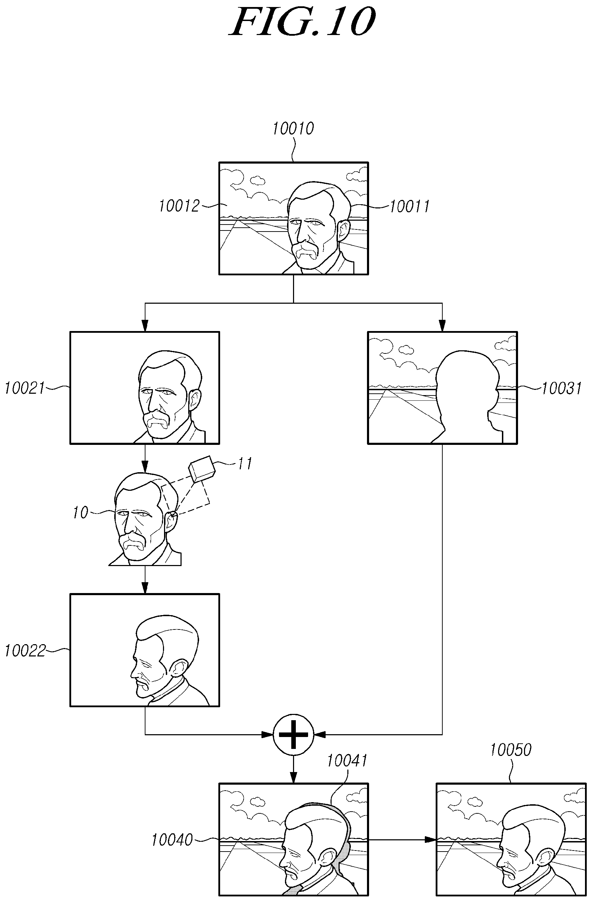

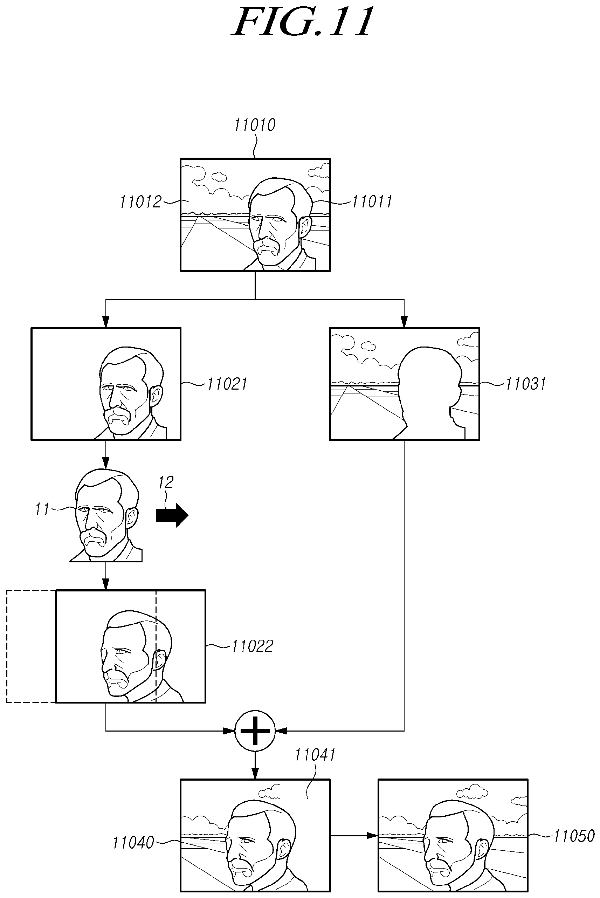

FIG. 9 is a flowchart illustrating a procedure of editing a 2D image using a 3D model according to an embodiment of the disclosure. FIG. 10 illustrates an example of 2D image editing using a 3D model according to an embodiment of the disclosure. FIG. 11 illustrates an example of 2D image editing using a 3D model according to an embodiment of the disclosure.

The 2D image editing procedure of FIG. 9 differs from the 2D image editing procedure of FIG. 6 only in that image processing for the background (e.g., in-painting processing and out-painting processing) is performed after generating the output 2D image, and the image processing for the subject may be the same. Accordingly, redundant descriptions are omitted.

The 2D image editing of the embodiments of FIGS. 10 and 11 may be, e.g., 2D image editing using the 2D image editing procedure of FIG. 9.

According to an embodiment, the editing of the 2D image using the 3D model may include, e.g., rotation, translation, scaling, expression change, lighting effect, shadow effect, restoration of a blurred portion, and/or composition of a subject (or, an object) in the 2D image using the 3D model, but the disclosure is not limited thereto.

Referring to FIG. 9, in operation 9010, the electronic device (e.g., the electronic device 101 of FIG. 1) may identify (or, obtain) an input 2D image including a target subject (hereinafter, may be referred to as the first subject) and a background. For example, as illustrated in FIGS. 10 and 11, the electronic device may identify an input 2D image 10010, 11010 including a first subject 10011, 11011 and a background 10012, 11012. For the description of operation 9010, a reference may be made to the description of operation 6010. Therefore, no duplicate description is given.

In operation 9020, the electronic device may separate the input 2D image into a first subject image including the first subject and a first background image including the background. For example, as illustrated in FIGS. 10 and 11, the electronic device may separate the input 2D image 10010, 11010 into a first subject image 10021, 11021 and a first background image 10031, 11031. For the description of operation 9020, a reference may be made to the description of operation 6020. Therefore, no duplicate description is given.

In operation 9030, the electronic device may convert the first subject in the first subject image using the 3D model for the first subject to generate a second subject image including a converted first subject. For the description of operation 9030, a reference may be made to the description of operation 6030. Therefore, no duplicate description is given.

According to an embodiment, the electronic device may change the orientation of the first subject by changing an orientation of a virtual camera toward the 3D model (or, the deformed 3D model) corresponding to the first subject based on a user input. For example, as illustrated in FIG. 10, the electronic device may change the orientation of the first subject 10011 based on receiving a user input changing the orientation of a virtual camera 11 directed toward the 3D model (or, the deformed 3D model 10) corresponding to the first subject 10011. Thereafter, the electronic device may generate (or, render) the second subject image including the first subject of which the orientation is changed. For example, as illustrated in FIG. 10, the electronic device may generate the second subject image 10022 including the first subject 10011 of which the orientation is changed. Accordingly, the shape of the first subject in a different orientation may be illustrated. For example, as illustrated in FIG. 10, a left side of the face, rather than a front of the face of the first subject illustrated on the first subject image 10021, may be illustrated on the second subject image 10022.

According to an embodiment, the electronic device may change the position and/or orientation of the first subject by changing the position of the first subject using the 3D model (or, the deformed 3D model) corresponding to the first subject based on a user input. For example, the electronic device may obtain a user input for moving the first subject in a first direction (e.g., an upward, downward, leftward, or rightward direction), and change the position and orientation of the first subject using the 3D model (or, the deformed 3D model) corresponding to the first subject in response to obtaining the user input. For example, as illustrated in FIG. 11, the electronic device may obtain a user input for moving the 3D model (or, the deformed 3D model 11) corresponding to the first subject in a rightward direction 12, and change the position and orientation of the first subject 11021 together using the 3D model (or, the deformed 3D model) corresponding to the first subject in response to obtaining the user input. As such, the user input is merely a user input for position movement of the first subject, but for example, considering that a composition of a camera that captured the input 2D image is fixed regardless of the position movement of the first subject, under the corresponding camera composition, the position movement of the first subject may accompany a change in position and orientation. Thereafter, the electronic device may generate (or, render) the second subject image including the first subject of which the position and orientation are changed. For example, as illustrated in FIG. 11, the electronic device may generate the second subject image 11022 including the first subject 11011 of which the position and orientation are changed. Accordingly, the shape of the first subject in a different position and orientation may be illustrated. For example, as illustrated in FIG. 8, an intermediate face between a front and a left side, rather than the front of the face of the first subject 11011 illustrated on the first subject image 8021, may be illustrated on the second subject image 11022. In other words, the shape of the first subject of which the position and orientation are changed may be illustrated.

According to an embodiment, the electronic device may generate the second subject image including the first subject of which the size, position, and/or orientation are changed, by changing the size of the first subject using the 3D model (or, the deformed 3D model) for the first subject. As an example, the electronic device may change the size of the first subject using the 3D model (or, the deformed 3D model) for the first subject based on a user input.

According to an embodiment, the electronic device may perform image processing to provide expression change, lighting effect, shadow effect, restoration of a blurred portion, and/or composition of the first subject using the 3D model (or, the deformed 3D model) for the first subject, to generate the second subject image including the changed first subject. As an example, the electronic device may perform image processing to provide expression change, lighting effect, shadow effect, restoration of a blurred portion, and/or composition of the first subject using the 3D model (or, the deformed 3D model) based on a user input.

In operation 9040, the electronic device may combine the second subject image and the first background image to generate an output 2D image. For example, as illustrated in FIGS. 10 and 11, the electronic device may combine the second subject image 10022, 11022 and the first background image 10031, 11031 to generate an output 2D image 10040, 11040. As such, unlike the embodiment of FIG. 6, in the embodiment of FIG. 9, the second subject image on which the image processing for the subject is performed is combined with the first background image before the image processing for the background is performed, and thus additional processing for completing the background in the output 2D image is further required. This is described below with reference to operation 9050.

In operation 9050, the electronic device may perform image processing for the background within the output 2D image to generate a final output 2D image including a changed background (or, a completed background).

According to an embodiment, the image processing for the background may include in-painting processing for a first area within the first background image. The in-painting processing may be, e.g., image processing for restoring a missing area within an image based on information about a current image. As an example, as illustrated in FIG. 10, the electronic device may generate a final output 2D image 10050 including the changed background (or, the completed background) by performing in-painting processing to restore (or, complete) an area (or, a portion) 10041 where the background is missing within the output 2D image 10040 based on information included in the first background image 10031 or the output 2D image 10040. Accordingly, the area (or, the portion) where the background is missing may be restored. The area 10041 where the background is missing within the output 2D image 10040 may overlap at least a part of a subject exclusion portion within the first background image 10031.

According to an embodiment, the image processing for the background may include out-painting processing for a second area corresponding to the changed position of the subject outside the first background image. The out-painting processing may be, e.g., image processing for additionally generating an image for an extended area based on information about a current image. As an example, as illustrated in FIG. 11, the electronic device may generate a final 2D output image 11050 including the changed background (or, the completed background) by performing out-painting processing to additionally generate a background for an extended area 11041 corresponding to the changed position of the subject within the output 2D image 11040 based on information included in the first background image 11031 or the output 2D image 11040. Accordingly, a background may be newly added to a portion (or, an area) that extends according to the position movement of the subject. The extended area 11041 corresponding to the changed position of the subject within the output 2D image 10040 may overlap at least a part of a subject exclusion portion within the first background image 10031.

According to an embodiment, the image processing for the background may include image processing that performs the above-described in-painting processing and out-painting processing together. Descriptions of each of the in-painting processing and the out-painting processing may refer to the descriptions.

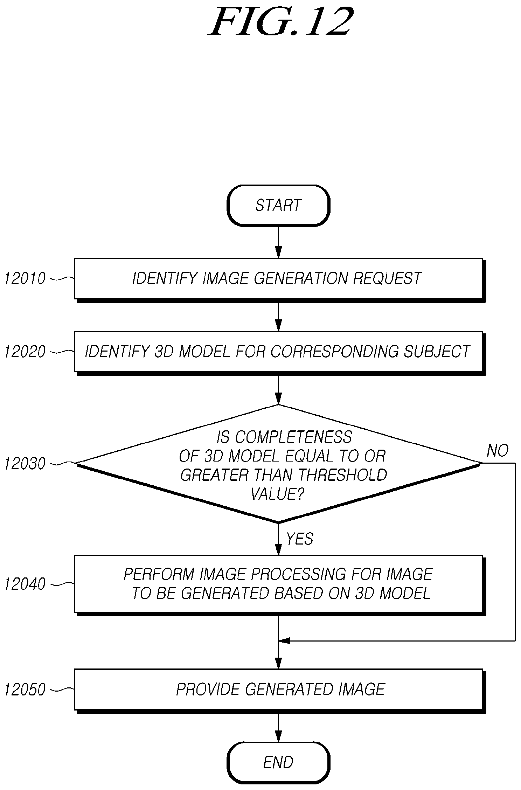

FIG. 12 is a flowchart illustrating a procedure of generating an image using a 3D model according to an embodiment of the disclosure.

Referring to FIG. 12, in operation 12010, the electronic device (e.g., the electronic device 101 of FIG. 1) may identify an image generation request.

According to an embodiment, the electronic device may identify the image generation request based on a user input. For example, the electronic device may receive a user input requesting image generation, and identify the image generation request based thereon.

According to an embodiment, the image generation request may be, e.g., a request for generating a 2D image or a 3D image using a generative AI. As an example, the image generation request may be a request for generating a capture (e.g., an ID photo, a profile photo) or a picture using a generative AI.

According to an embodiment, the image generation request may include information related to an image to be generated (hereinafter, referred to as image generation-related information) (e.g., a capture or a picture). The image generation-related information may include, e.g., information indicating a subject (hereinafter, referred to as a target subject) that is a target of the image to be generated, information about a viewpoint from which the target subject looks, information about a position and orientation of the target subject in the image to be generated, information about a style (e.g., a hairstyle, whether glasses are worn, whether a hat is worn, a degree of weight, and/or a clothing style) of the target subject, information about an expression of the target subject, information about a background of the image to be generated, information about a lighting effect of the image to be generated, information about a shadow effect of the image to be generated, information about a background (e.g., an object/subject/surrounding environment other than the target subject) in the image to be generated, and/or information about a period (or, a time interval) of the target subject. According to an embodiment, the image generation-related information may be information input by a user.

In operation 12020, the electronic device may identify a 3D model for the target subject (or, the corresponding subject). According to an embodiment, the electronic device may identify the target subject based on the image generation request, and identify the 3D model for the identified target subject. The 3D model may be a 3D model already generated and stored using 2D images of the target subject. Generation/update of the 3D model and types of the generated 3D model may refer to the descriptions of FIGS. 2 to 5.

According to an embodiment, the electronic device may determine whether to use the identified 3D model for performing image processing for the image to be generated. For example, to determine whether to use the identified 3D model for performing image processing for the image to be generated, the electronic device may identify whether a completeness of the identified 3D model satisfies a preset criterion (e.g., a threshold). As an example, to determine whether to use the identified 3D model for performing image processing for the image to be generated, as in operation 12030, the electronic device may identify whether the completeness (and/or precision) of the 3D model is equal to or greater than a threshold. As described above, since the 3D model for the subject is generated and updated using stored 2D images of the subject, the completeness (and/or precision) of the 3D model may differ according to a point of time of use. For example, in case that the point of time of use is a first point of time, the number of 2D images used for generating the 3D model for the corresponding object may be small, and thus the completeness (and/or precision) of the 3D model may be low, but in case that the point of time of use is a second point of time after the first point of time, a sufficiently large number of 2D images used for generating the 3D model for the corresponding object may be accumulated, and thus the completeness (and/or precision) of the 3D model may be high.

According to an embodiment, the threshold may be a value preset to identify whether the 3D model for the subject satisfies a usable level.

According to an embodiment, the electronic device may identify whether the completeness (and/or precision) of the 3D model is equal to or greater than the threshold based on a user input, or on its own without a user input. As an example, the electronic device may receive a user input related to the completeness (and/or precision) of the 3D model, and identify whether the completeness (and/or precision) of the 3D model is equal to or greater than the threshold based on the user input. For example, the electronic device may receive a user input indicating that the completeness of a portion (e.g., a rear part of a head) of the 3D model is low, and identify that the completeness of the 3D model is less than the threshold based on the received user input.

According to an embodiment, in case that the completeness (and/or precision) of the 3D model is equal to or greater than the threshold, the electronic device may identify that the 3D model exceeds a usable level, and perform operation 12040.

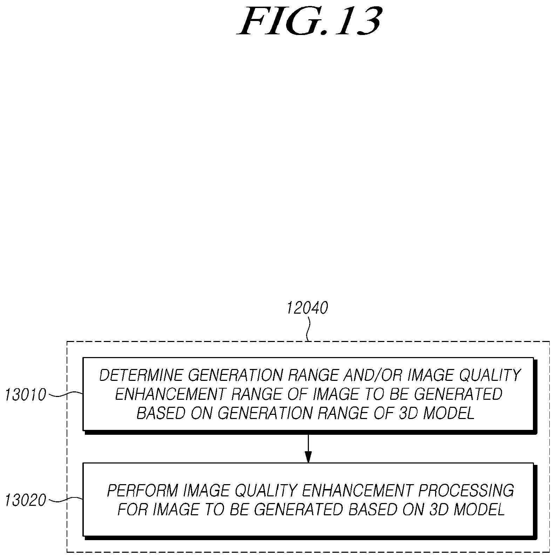

In operation 12040, the electronic device may perform image processing for the image to be generated based on the 3D model. According to an embodiment, the image processing may include image quality (or, quality) enhancement processing for the image to be generated. The image quality enhancement processing may include processing for enhancing image quality or quality of the image to be generated based on the 3D model. As an example, the image quality enhancement processing may include processing for enhancing a lighting effect and/or a shadow effect on the image or capture to be generated using 3D depth information of the 3D model. As an example, the image quality enhancement processing may include processing for expression change, style change, restoration of a blurred portion, rotation, translation, scaling, and/or composition of an object in the image to be generated using information of the 3D model. Through such image quality enhancement processing using a 3D model having a usable level of completeness and precision, an image with higher image quality or quality may be provided to a user compared to simply using a generative AI. For example, a more precise and impressive image may be provided to the user. An example of the image processing is described below with reference to FIG. 13.

According to an embodiment, in case that the completeness (and/or precision) of the 3D model is less than the threshold, the electronic device may identify that the 3D model does not exceed a usable level, and perform operation 12050 immediately without performing operation 12040. As such, in case that the 3D model does not have a usable level of completeness (and/or precision), the electronic device may omit an operation of performing image processing for the image to be generated using the 3D model.

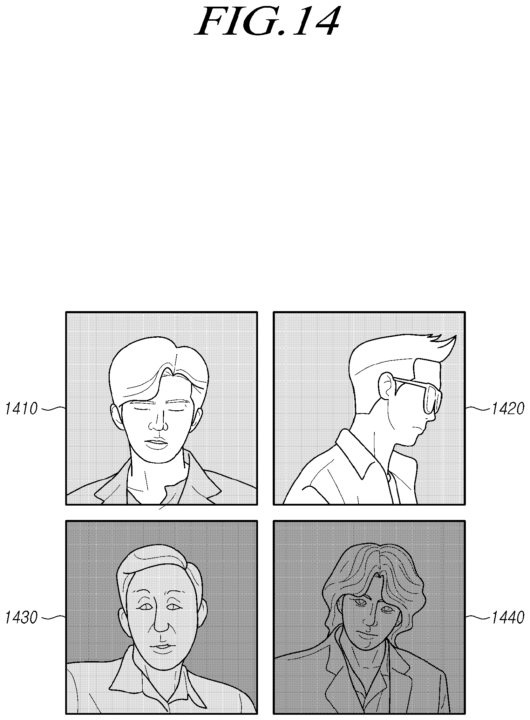

In operation 12050, the electronic device may provide the generated image (e.g., photograph, picture). According to an embodiment, the electronic device may display the generated image on a display. An example of the generated image displayed on the display is described below with reference to FIG. 14.

FIG. 13 illustrates an example of an image processing operation using a 3D model within a procedure of generating an image using the 3D model according to an embodiment of the disclosure. FIG. 14 illustrates examples of images generated through a procedure of generating images using a 3D model according to an embodiment of the disclosure.

In the embodiments of FIGS. 13 and 14, the procedure of generating an image using a 3D model may be, e.g., the procedure of generating an image using a 3D model of FIG. 12.

The embodiment of FIG. 13 may be, e.g., an example of operation 12040 of FIG. 12.

Referring to FIG. 13, in operation 13010, the electronic device may determine a generation range and/or an image quality enhancement range of the image to be generated based on a generation range of the 3D model.

In operation 13020, the electronic device may perform image quality enhancement processing for the image to be generated based on the 3D model.

According to an embodiment, in case that the subject is a person, the generation range of the 3D model for the corresponding subject may be, e.g., a range up to the face, or a range up to the upper body, but the disclosure is not limited thereto.

According to an embodiment, in case that the generation range of the 3D model is a range up to the face, the electronic device may set a generation range of the image to be generated and/or a range subject to image quality enhancement of the image to be generated to the range up to the face. As an example, the electronic device may generate and perform image quality enhancement processing for the image up to the face using the 3D model, or generate the image up to the upper body but perform image quality enhancement processing only up to the face and provide the image to the user. For example, as illustrated in the first photo 1410 of FIG. 14, the electronic device may generate the image up to the upper body but perform image quality enhancement processing (e.g., brighter lighting processing) only up to the face and provide the image to the user.

According to an embodiment, in case that the generation range of the 3D model is a range up to the upper body, the electronic device may set a generation range of the image to be generated and/or a range subject to image quality enhancement of the image to be generated to the range up to the upper body. As an example, the electronic device may generate and perform image quality enhancement processing for the image up to the upper body using the 3D model, or generate the image up to the lower body but perform image quality enhancement processing only up to the upper body and provide the image to the user. For example, as illustrated in the second photo 1420 of FIG. 14, the electronic device may generate the image up to the upper body and perform image quality enhancement processing (e.g., brighter lighting processing) up to the upper body and provide the image to the user.

According to an embodiment, in case that a generated 3D model is not present, or even in case that a generated 3D model is present, if the completeness of the 3D model is less than the threshold, the electronic device may omit operation 12040 of FIG. 12 (or, operations 13010 and 13020 of FIG. 13). As an example, the electronic device may provide an image that is not image quality enhanced using the 3D model to the user. For example, as illustrated in the third photo 1430 and the fourth photo 1440 of FIG. 14, the electronic device may generate the image up to the upper body, but provide the image to the user without image quality enhancement processing (e.g., brighter lighting processing) for the face and the upper body.

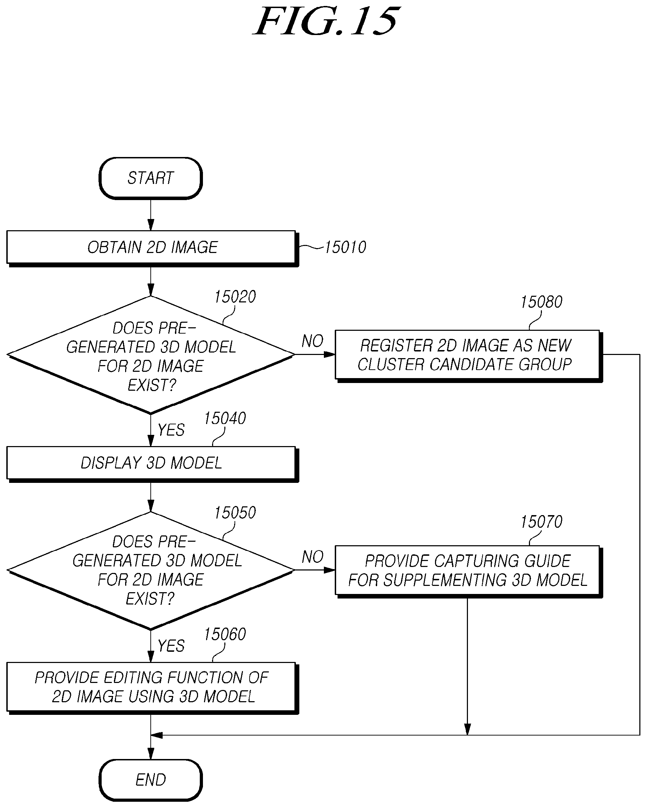

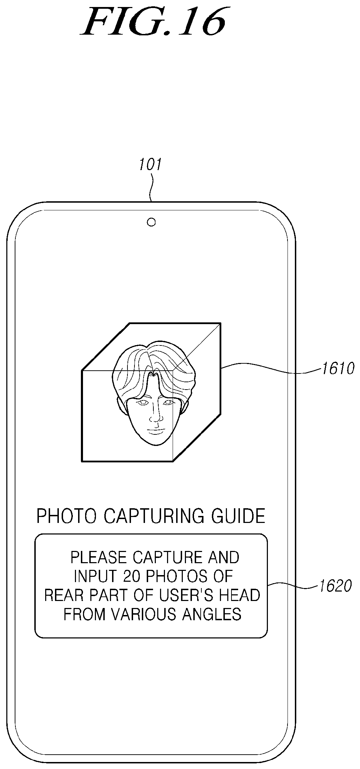

FIG. 15 is a flowchart illustrating a procedure of using a 3D model according to an embodiment of the disclosure. FIG. 16 illustrates an example of a capturing guide provided for supplementing a 3D model according to an embodiment of the disclosure.

Referring to FIG. 15, in operation 15010, the electronic device (e.g., the electronic device 101 of FIG. 1) may obtain a 2D image. According to an embodiment, the electronic device may obtain a 2D image to be edited. According to an embodiment, the 2D image may be an image input by a user.

In operation 15020, the electronic device may determine whether a pre-generated 3D model for the 2D image is present. According to an embodiment, to determine whether the pre-generated 3D model for the 2D image is present, the electronic device may identify whether a pre-generated 3D model for a subject included in the 2D image is present. Generation/update of the 3D model and types of the generated 3D model may refer to, e.g., FIGS. 2 to 5. Accordingly, redundant descriptions are omitted.

In case that the pre-generated 3D model for the 2D image is present, operation 15040 may be performed. In case that the pre-generated 3D model for the 2D image is not present, operation 15080 may be performed.

In operation 15040, the electronic device may display (or, provide) the 3D model. For example, as illustrated in FIG. 16, the electronic device 101 may display a 3D model 1610 on the display.

According to an embodiment, the electronic device may determine whether the 3D model satisfies a usable level. As an example, to determine whether the 3D model satisfies the usable level, in operation 15050, the electronic device may identify whether the completeness (and/or precision) of the 3D model is equal to or greater than a threshold. The operation of identifying whether the completeness (and/or precision) of the 3D model is equal to or greater than the threshold may refer to, e.g., the description of operation 12030. Accordingly, redundant descriptions are omitted.

According to an embodiment, the threshold may be a value preset to identify whether the 3D model for the subject satisfies a usable level.

According to an embodiment, the electronic device may identify whether the completeness (and/or precision) of the 3D model is equal to or greater than the threshold based on a user input, or on its own without a user input. As an example, the electronic device may receive a user input related to the completeness (and/or precision) of the 3D model, and identify whether the completeness (and/or precision) of the 3D model is equal to or greater than the threshold based on the user input. For example, the electronic device may receive a user input indicating that the completeness of a portion (e.g., a rear part of a head) of the 3D model is low, and identify that the completeness of the 3D model is less than the threshold based on the received user input.

In case that the 3D model satisfies the usable level (e.g., in case that the completeness of the 3D model is equal to or greater than the threshold), operation 15060 may be performed. In case that the 3D model does not satisfy the usable level (e.g., in case that the completeness of the 3D model is less than the threshold), operation 15070 may be performed.

In operation 15060, the electronic device may provide an editing function of the 2D image using the 3D model. The description of the 2D image editing procedure through the editing function of the 2D image using the 3D model may refer to the descriptions of FIGS. 6 to 12. Accordingly, redundant descriptions are omitted.

In operation 15070, the electronic device may provide a capturing guide for supplementing (or, updating) the 3D model. As such, in case that the 3D model does not satisfy the usable level, the electronic device may request an additional 2D image through providing a capturing guide so that the 3D model satisfies the usable level.

According to an embodiment, e.g., in case of receiving a user input indicating that the completeness of a portion (e.g., a rear part of a head) of the 3D model is low, the electronic device may analyze the received user input and provide a user with a capturing guide for additional capturing to update (or, supplement) the corresponding portion of the 3D model.

According to an embodiment, the electronic device may visually provide the capturing guide for supplementing the 3D model (e.g., display a guide phrase on the display), or audibly provide the capturing guide (e.g., provide a guide voice). As an example, in case that the completeness and/or precision of the 3D model for a rear part of a head of a user is low, as illustrated in FIG. 16, the electronic device 101 may display a photo capturing guide 1620 such as "Please capture and input 20 photos of the rear part of the user's head from various angles" on the display.

The 2D images input (or, added) through this capturing guide may be used to supplement (or, update) the 3D model. The operation of updating the 3D model may refer to, e.g., the description of operation 5080 of FIG. 5. Accordingly, redundant descriptions are omitted.

In operation 15080, the electronic device may register the 2D image as a new cluster candidate group. As such, in case that the pre-generated 3D model for the 2D image is not present (e.g., in case that the pre-generated 3D model for the subject included in the 2D image is not present), the electronic device may register the 2D image as a new cluster candidate group and, in case that sufficient 2D images for the corresponding cluster candidate group are secured, generate the 3D model through the above-described clustering and segmentation operations. In this regard, the descriptions of operations 5010 to 5050 of FIG. 5 may be referred to, for example. Accordingly, redundant descriptions are omitted.

According to an embodiment, the electronic device 101 may include a memory 130 and a processor 120.

According to an embodiment, the processor 120 may identify an input two-dimensional (2D) image including a first subject and a background.

According to an embodiment, the processor 120 may separate the input 2D image into a first subject image including the first subject and a first background image including the background.

According to an embodiment, the processor 120 may perform image processing to change at least one of a size, a position, or an orientation of the first subject using a three-dimensional (3D) model for the first subject, to generate a second subject image including a changed first subject.

According to an embodiment, the processor 120 may perform image processing for at least one of a subject exclusion area within the first background image or an extended area outside the first background image, to generate a second background image including a changed background. The extended area may be associated with a change of the first subject.

According to an embodiment, the processor 120 may be configured to combine the second subject image and the second background image to generate an output 2D image.

According to an embodiment, the processor 120 may deform a pre-generated 3D model for the first subject based on the first subject image.

According to an embodiment, the processor 120 may perform image processing to change at least one of a size, a position, or an orientation of the first subject using the deformed 3D model as the 3D model for the first subject, to generate the second subject image including the changed first subject.

According to an embodiment, the image processing for the subject exclusion area within the first background image may include in-painting processing to add a background to the subject exclusion area based on information included in the first background image.

According to an embodiment, the processor 120 may obtain a user input for translating the first subject. According to an embodiment, the processor 120 may perform image processing to change the position and the orientation using the 3D model in response to obtaining the user input, to generate the second subject image including the first subject of which the position and the orientation are changed.

According to an embodiment, the image processing for the extended area outside the first background image may include out-painting processing to add a background to the extended area associated with the changed position of the subject based on information included in the first background image.

According to an embodiment, the processor 120 may obtain 2D images from at least one of an internal storage device of the electronic device 101 or an external storage device connected to the electronic device 101. According to an embodiment, the processor 120 may identify at least one subject for which a 3D model is to be generated based on the 2D images. The at least one subject may include the first subject. According to an embodiment, the processor 120 may cluster the 2D images per the identified subject. According to an embodiment, the processor 120 may obtain 2D images including the first subject from which the background is excluded, by separating the first subject and the background from 2D images belonging to a cluster of the first subject. According to an embodiment, the processor 120 may generate the 3D model for the first subject using the 2D images including the first subject from which the background is excluded.

According to an embodiment, the 2D images including the first subject from which the background is excluded may correspond to 2D images from a first point of time to a second point of time after the first point of time. According to an embodiment, the processor 120 may identify a period from the first point of time to the second point of time using time information included in the 2D images including the first subject from which the background is excluded. According to an embodiment, the processor 120 may divide the period from the first point of time to the second point of time into a plurality of time intervals. According to an embodiment, the processor 120 may be configured to generate a 3D model for the first subject for each time interval using the 2D images including the first subject from which the background is excluded, belonging to each time interval.

According to an embodiment, the processor 120 may three-dimensionally provide an appearance of the first subject changing over time by matching 3D feature points among a plurality of 3D models for the first subject generated for each time interval.

According to an embodiment, the processor 120 may identify whether a completeness of the 3D model for the first subject satisfies a threshold. According to an embodiment, in case that it is identified that the completeness of the 3D model is less than the threshold, the processor 120 may provide a user with a capturing guide for obtaining an additional 2D image of the first subject in order to increase the completeness of the 3D model.

According to an embodiment, the processor 120 may display the 3D model for the first subject on a display. According to an embodiment, the processor 120 may receive a user input associated with the completeness of the 3D model. According to an embodiment, the processor 120 may identify whether the completeness of the 3D model satisfies a preset criterion based on the user input.

According to an embodiment, the processor 120 may be configured to update the 3D model for the first subject based on obtaining at least one additional 2D image of the first subject.

According to an embodiment, a method of the electronic device 101 may include identifying an input two-dimensional (2D) image including a first subject and a background. The method may include separating the input 2D image into a first subject image including the first subject and a first background image including the background. The method may include performing image processing to change at least one of a size, a position, or an orientation of the first subject using a three-dimensional (3D) model for the first subject, to generate a second subject image including a changed first subject. The method may include performing image processing for at least one of a subject exclusion area within the first background image or an extended area outside the first background image, to generate a second background image including a changed background, and the extended area may be associated with a change of the first subject. The method may include combining the second subject image and the second background image to generate an output 2D image.

According to an embodiment, the method may further include deforming a pre-generated 3D model for the first subject based on the first subject image. The generating of the second subject image including the changed first subject may include generating the second subject image including the changed first subject by performing image processing to change at least one of a size, a position, or an orientation of the first subject using the deformed 3D model.

According to an embodiment, the image processing for the subject exclusion area within the first background image may include in-painting processing to add a background to the subject exclusion area based on information included in the first background image.

According to an embodiment, the method may include obtaining a user input for translating the first subject, and performing image processing to change the position and the orientation using the 3D model in response to obtaining the user input, to generate the second subject image including the first subject of which the position and the orientation are changed.

According to an embodiment, the image processing for the extended area outside the first background image may include out-painting processing to add a background to the extended area associated with the changed position of the subject based on information included in the first background image.

According to an embodiment, the method may include obtaining 2D images from at least one of an internal storage device of the electronic device 101 or an external storage device connected to the electronic device 101; identifying at least one subject for which a 3D model is to be generated based on the 2D images, wherein the at least one subject includes the first subject; clustering the 2D images per the identified subject; obtaining 2D images including the first subject from which the background is excluded, by separating the first subject and the background from 2D images belonging to a cluster of the first subject; and generating the 3D model for the first subject using the 2D images including the first subject from which the background is excluded.

According to an embodiment, the 2D images including the first subject from which the background is excluded may correspond to 2D images from a first point of time to a second point of time after the first point of time. The method may include identifying a period from the first point of time to the second point of time using time information included in the 2D images including the first subject from which the background is excluded, dividing the period from the first point of time to the second point of time into a plurality of time intervals, and generating a 3D model for the first subject for each time interval using the 2D images including the first subject from which the background is excluded, belonging to each time interval.

According to an embodiment, the method may include three-dimensionally providing an appearance of the first subject changing over time by matching 3D feature points among a plurality of 3D models for the first subject generated for each time interval.

According to an embodiment, the method may include identifying whether a completeness of the 3D model for the first subject satisfies a threshold, and in case that identifying that the completeness of the 3D model is less than the threshold, providing a user with a capturing guide for obtaining an additional 2D image of the first subject in order to increase the completeness of the 3D model.

According to an embodiment, the method may include displaying the 3D model for the first subject on a display, receiving a user input associated with the completeness of the 3D model, and identifying whether the completeness of the 3D model satisfies a preset criterion based on the user input.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the present disclosure have been described above, various changes may be made thereto without departing from the scope of the present disclosure. Thus, the scope of the present invention should not be limited to the above-described embodiments, and should rather be defined by the following claims and equivalents thereof.

Effects obtainable from the disclosure are not limited to the above-mentioned effects, and other effects not mentioned are clearly understood by those of ordinary skill in the art to which the disclosure belongs from the description below.

## Claims

1. An electronic device (101) comprising:
memory (130) comprising at least one storage medium storing instructions; and
at least one processor (120) comprising processing circuitry, wherein the instructions, when executed by the at least one processor, cause the electronic device to:
identify an input two-dimensional (2D) image including a first subject and a background,
separate the input 2D image into a first subject image including the first subject and a first background image including the background,
perform image processing to change at least one of a size, a position, or an orientation of the first subject using a three-dimensional (3D) model for the first subject, to generate a second subject image including a changed first subject,
perform image processing for at least one of a subject exclusion area within the first background image or an extended area outside the first background image, to generate a second background image including a changed background, the extended area being associated with a change of the first subject, and
combine the second subject image and the second background image to generate an output 2D image.

2. The electronic device of claim 1,
wherein the instructions, when executed by the at least one processor, cause the electronic device to:
based on the first subject image, deform a pre-generated 3D model for the first subject, and
perform image processing to change at least one of a size, a position, or an orientation of the first subject using the deformed 3D model as the 3D model for the first subject, to generate the second subject image including the changed first subject.

3. The electronic device of claim 1 or 2,
wherein the image processing for the subject exclusion area within the first background image includes in-painting processing to add a background to the subject exclusion area based on information included in the first background image.

4. The electronic device of any one of claims 1 to 3,
wherein the instructions, when executed by the at least one processor, cause the electronic device to:
obtain a user input for translating the first subject, and
in response to obtaining the user input, perform image processing to change the position and the orientation using the 3D model, to generate the second subject image including the first subject of which the position and the orientation are changed.

5. The electronic device of any one of claims 1 to 4,
wherein the image processing for the extended area outside the first background image includes out-painting processing to add a background to the extended area associated with the changed position of the first subject based on information included in the first background image.

6. The electronic device of any one of claims 1 to 5,
wherein the instructions, when executed by the at least one processor, cause the electronic device to:
obtain 2D images from at least one of an internal storage device of the electronic device (101) or an external storage device connected to the electronic device (101),
based on the 2D images, identify at least one subject for which a 3D model is to be generated, wherein the at least one subject includes the first subject,
cluster the 2D images per the identified subject,
obtain 2D images including the first subject from which the background is excluded, by separating the first subject and the background from 2D images belonging to a cluster of the first subject, and
generate the 3D model for the first subject using the 2D images including the first subject from which the background is excluded.

7. The electronic device of any one of claims 1 to 6,
wherein the 2D images including the first subject from which the background is excluded correspond to 2D images from a first point of time to a second point of time after the first point of time, and
wherein the instructions, when executed individually or collectively by the at least one processor, cause the electronic device to:
identify a period from the first point of time to the second point of time, using time information included in the 2D images including the first subject from which the background is excluded,
divide the period from the first point of time to the second point of time into a plurality of time intervals, and
generate a 3D model for the first subject for each time interval, using the 2D images including the first subject from which the background is excluded, belonging to each time interval.

8. The electronic device of any one of claims 1 to 7,
wherein the instructions, when executed individually or collectively by the at least one processor, cause the electronic device to:
three-dimensionally provide an appearance of the first subject changing over time by matching 3D feature points among a plurality of 3D models for the first subject generated for each time interval.

9. The electronic device of any one of claims 1 to 8, wherein the instructions, when executed individually or collectively by the at least one processor, cause the electronic device to:
identify whether a completeness of the 3D model for the first subject satisfies a threshold, and
in case that identifying that the completeness of the 3D model is less than the threshold, provide a user with a capturing guide for obtaining an additional 2D image of the first subject in order to increase the completeness of the 3D model.

10. The electronic device of any one of claims 1 to 9, wherein the instructions, when executed individually or collectively by the at least one processor, cause the electronic device to:
display the 3D model for the first subject on a display,
receive a user input associated with the completeness of the 3D model, and
identify whether the completeness of the 3D model satisfies a preset criterion based on the user input.

11. The electronic device of any one of claims 1 to 10, wherein the instructions, when executed by the at least one processor, cause the electronic device to:
update the 3D model for the first subject based on obtaining at least one additional 2D image of the first subject.

12. A method of an electronic device (101), the method comprising:
identifying an input two-dimensional (2D) image including a first subject and a background;
separating the input 2D image into a first subject image including the first subject and a first background image including the background;
performing image processing to change at least one of a size, a position, or an orientation of the first subject using a three-dimensional (3D) model for the first subject, to generate a second subject image including a changed first subject;
performing image processing for at least one of a subject exclusion area within the first background image or an extended area outside the first background image, to generate a second background image including a changed background, the extended area being associated with a change of the first subject; and
combining the second subject image and the second background image to generate an output 2D image.

13. The method of claim 12, further comprising:
deforming a pre-generated 3D model for the first subject based on the first subject image, wherein the generating of the second subject image including the changed first subject includes:
performing image processing to change at least one of a size, a position, or an orientation of the first subject using the deformed 3D model, to generate the second subject image including the changed first subject.

14. The method of claim 12 or 13,
wherein the image processing for the subject exclusion area within the first background image includes in-painting processing to add a background to the subject exclusion area based on information included in the first background image.

15. The method of any one of claims 12 to 14, further comprising:
obtaining a user input for translating the first subject; and
in response to obtaining the user input, performing image processing to change the position and the orientation using the 3D model, to generate the second subject image including the first subject of which the position and the orientation are changed.
